# EUROPÄISCHE PATENTANMELDUNG

(11) **EP 1 265 024 A2**
(43) Veröffentlichungstag der Anmeldung: **11.12.2002**
(21) Anmeldenummer: 02012573.8
(22) Anmeldetag: 06.06.2002
(51) Int. Cl.: F21S 8/10, F21V 8/00, F21V 15/06

(54) **Scheinwerfer für Fahrzeuge**

(30) Priorität: 08.06.2001 DE 10127966
(71) Anmelder: Hella KG Hueck & Co., 59552 Lippstadt (DE)
(72) Erfinder: Knaack, Ulrich, 33098 Paderborn (DE); Sprenger, Winfried, 59555 Lippstadt (DE); Schwenkschuster, Lukas, 59555 Lippstadt (DE)

(57) **Zusammenfassung**

Scheinwerfer für Fahrzeuge mit einem eine Lichtscheibe aufweisenden Gehäuse (7), in dessen Innenraum (3) mindestens ein Lichtmodul und ein Lichtleitelement (6) mit einer Lichtaustrittsfläche (5) angeordnet ist. Eine Lichtquelle (1), die eine LED ist, ist einer Lichteinkoppelfläche des Lichtleitelements (6) zugeordnet und im äußeren Randbereich des Gehäuses (7) angeordnet. Zwischen der LED (1) und dem Lichtmodul verläuft ein als Wärmesperre dienendes erstes Wandelement (8) einer die LED (1) aufnehmenden Kammer (2).

## Beschreibung

Die Erfindung betrifft einen Scheinwerfer für Fahrzeuge mit einem eine Lichtscheibe aufweisenden Gehäuse, in dessen Innenraum mindestens ein Lichtmodul und ein Lichtleitelement mit einer Lichtaustrittsfläche angeordnet ist, und mit mindestens einer Lichtquelle, die einer Lichteinkoppelfläche des Lichtleitelements zugeordnet ist und im äußeren Randbereich des Gehäuses angeordnet ist.

Aus der DE 35 18 265 A1 ist ein Scheinwerfer für Fahrzeuge bekannt, bei dem ein Lichtleitelement ein Lichtleitstab für Positionslicht ist. Der Lichtleitstab ist seitlich neben einem Projektionsmodul und einem schalenförmigen Reflektor angeordnet und erstreckt sich von der Rückseite eines topfförmigen Gehäuses bis zu einer das Gehäuse abschließenden Abschlussscheibe. In einer Rückwand des Gehäuses ist eine Lichtquelle benachbart zu einer Lichteinkoppelfläche des Lichtleitstabes angeordnet, der an seinem zur Abschlussscheibe weisenden freien Ende eine Lichtauskoppelfläche aufweist. Im Innenraum des Scheinwerfers herrschen aufgrund der Abwärme der Lampen des Projektionsmoduls und des schalenförmigen Reflektors sehr hohe Temperaturen. Aus diesem Grund muss die dem Lichtelement zugeordnete Lichtquelle hohen Temperaturen standhalten können, wie zum Beispiel eine Glühlampe. Die Glühlampe muss wegen ihrer begrenzten Lebensdauer auswechselbar am Scheinwerfer angebracht sein. Um die Glühlampe am Fahrzeug wechseln zu können, ist diese im Bereich der Rückseite des Gehäuses angeordnet und durch eine Öffnung in der Rückseite des Gehäuses hindurch zugänglich. Wegen der unbedingt erforderlichen Lage der Glühlampe an der Rückseite des Gehäuses muss sich das Lichtleitelement bis dorthin erstrecken und somit lang ausgeführt sein.

Aufgabe der Erfindung ist es, den im Oberbegriff des Anspruchs 1 beschriebenen Scheinwerfer derart zu verbessern, dass auch bei einem kurz ausgeführten Lichtleitelement keine Probleme mit der dem Lichtleitelement zugeordneten Lichtquelle bestehen. Diese Aufgaben wird nach der Erfindung dadurch gelöst, dass die Lichtquelle eine LED ist, zwischen der und dem Lichtmodul ein als Wärmesperre dienendes erstes Wandelement einer die LED aufnehmenden Kammer verläuft. Durch den Einsatz eines als Wärmesperre dienenden Wandabschnitts ist die Benutzung von wärmeempfindlichen LED's ohne Probleme möglich. Eine Auswechselbarkeit der LED muss nicht vorgesehen sein, da LED's eine sehr hohe Lebensdauer haben. Vorteilhaft hierbei ist, wenn die die LED aufnehmende Kammer luftdicht zum Innenraum des Gehäuses ist. Das Lichtleitelement ist kurz ausführbar, wenn die LED in der Nähe der Lichtscheibe des Gehäuses angeordnet ist und das Lichtleitelement durch das als Wärmesperre dienende erste Wandelement hindurch verläuft.

Weiterhin ist es vorteilhaft, wenn die LED und das erste Wandelement in einem unteren Bereich des Gehäuses angeordnet sind. Dadurch ist die LED an dem kühlsten Ort des von einer Lampe des Lichtmoduls stark aufgeheizten Innenraums des Gehäuses angeordnet.

Die LED ist vor einer hohen Temperatur im Innenraum gut geschützt, wenn das erste Wandelement von einem separaten Bauteil gebildet ist, das geringere Wärmeleitungseigenschaften aufweist als die Außenwände des Gehäuses.

Das erste Wandelement ist kostengünstig herstellbar, wenn das erste Wandelement einstückig mit einem aus Kunststoff bestehenden Gehäuse hergestellt ist. Außerdem dichtet das erste Wandelement durch seine einstückige Ausführung mit dem Gehäuse den das Lichtmodul aufnehmenden Innenraum des Gehäuses, ohne besondere Dichtungmaßnahmen durchzuführen, dicht zur der die LED aufnehmenden Kammer ab.

Bei einer besonders vorteilhaften Weiterbildung der Erfindung weist die die LED aufnehmende Kammer eine Kühleinrichtung auf, welche die Wärme zur Umgebungsluft des Scheinwerfers abführt. Die Kühleinrichtung ist besonders kostengünstig herstellbar, wenn als Kühleinrichtung ein zweites Wandelement dient, das die die LED aufnehmende Kammer zur Umgebungsluft des Scheinwerfers begrenzt. Wärme aus der Kammer wird besonders schnell nach außen abgeführt, wenn das zweite Wandelement aus Metall hergestellt ist und die LED an dem zweiten Wandelement gehaltert ist. In diesem Zusammenhang ist es besonders vorteilhaft, wenn das zweite Wandelement ein separates Bauteil ist und das erste Wandelement einstückig mit dem Gehäuse ausgeführt ist. Dadurch ist die Kammer zum Innenraum des Gehäuses luftdicht ausgeführt.

Das Innere der die LED aufnehmenden Kammer ist von außen zugänglich, wenn das separate Bauteil lösbar an dem Gehäuse befestigt ist.

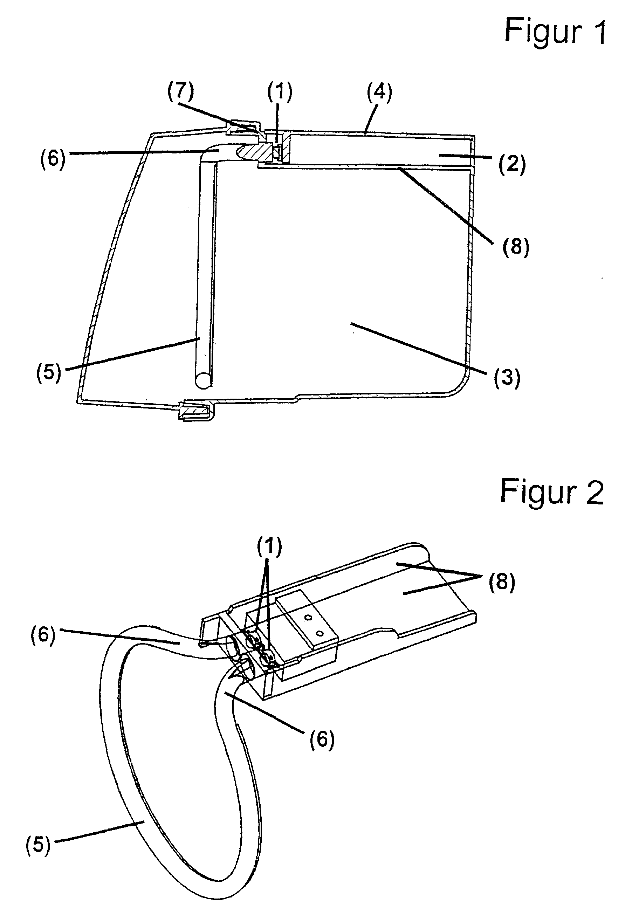

Ein Ausführungsbeispiel nach der Erfindung ist in der Zeichnung dargestellt und zwar zeigen
Figur 1 in einer Seitenansicht einen mittleren Schnitt durch einen Scheinwerfer für Fahrzeuge mit einem in seinem Innenraum angeordneten Lichtleitelement für Positionslicht und
Figur 2 in einer perspektivischen Ansicht das Lichtelement in Figur 1 mit einem das Lichtelement und LED's halternden zweiten Wandelement.

Ein Scheinwerfer für Fahrzeuge weist ein aus Kunststoff bestehendes topfförmiges Gehäuse 7 auf, dessen vordere Öffnung von einer Lichtscheibe abgeschlossen ist. Im von Gehäuse 7 und Lichtscheibe gebildeten Innenraum 3 ist mindestens ein nicht dargestelltes Lichtmodul angeordnet. Das Lichtmodul kann ein Projektionsmodul bzw. ein schalenförmiger Reflektor mit einer Glühlampe oder einer Gasentladungslampe sein. Weiterhin ist in dem Gehäuse 7 ein Lichtleitelement 6 für Positionslicht angeordnet. Das Lichtleitelement 6 verläuft nahe der vorderen Öffnung des Gehäuses 7 ringförmig und umgibt das nicht dargestellte Lichtmodul. In dem ringförmigen Bereich weist das Lichtleitelement 6 eine in Lichtaustrittsrichtung gerichtete kreisringförmige Lichtaustrittsfläche 5 auf. Das ringförmige Lichtleitelement 6 weist im oberen Bereich zwei Endabschnitte auf, welche durch Öffnungen, die nahe dem vorderen Rand des Gehäuses angeordnet sind, durch eine erstes Wandelement 8 hindurch in eine Kammer 2 hineinragen. Das erste Wandelement 8 ist einstückig mit der oberen Seitenwand des Gehäuses 7 ausgeführt. Ein zweites Wandelement 4 begrenzt die Kammer 2 zur Umgebungsluft des Scheinwerfers hin. Das zweite Wandelement 4 ist aus Werkstoff mit guten Wärmeleitungseigenschaften, wie zum Beispiel Metall, hergestellt, und haltert an einem Vorsprung, der an die Innenseite des Wandelements 4 angebracht ist, zwei nebeneinander angeordnete LED's. Die LED's sind jeweils einer Lichteinkoppelfläche eines Endabschnitts des Lichtleitelements 6 zugeordnet. Die Endabschnitte des Lichtleitelements 6 führen luftdicht durch die Öffnungen des ersten Wandelements 4 hindurch. Das erste Wandelement 8 dichtet durch seine einstückige Ausführung mit der oberen Seitenwand des Gehäuses 7 den Innenraum 3 des Gehäuses 7 zur Kammer 2 hin luftdicht ab, während das zweite Wandelement 4 lösbar an dem Gehäuse 7 befestigt ist.

### Bezugszeichen:

- 1.: LED
- 2.: Kammer
- 3.: Innenraum
- 4.: zweites Wandelement
- 5.: Lichtaustrittsfläche
- 6.: Lichtleitelement
- 7.: Gehäuse
- 8.: erstes Wandelement

## Patentansprüche

1. Scheinwerfer für Fahrzeuge mit einem eine Lichtscheibe aufweisenden Gehäuse (7), in dessen Innenraum (3) mindestens ein Lichtmodul und zumindest ein Lichtleitelement (6) mit einer Lichtaustrittsfläche (5) angeordnet ist, und mit mindestens einer Lichtquelle, die einer Lichteinkoppelfläche des Lichtleitelements (6) zugeordnet ist und im äußeren Randbereich des Gehäuses (7) angeordnet ist, **dadurch gekennzeichnet, dass** die Lichtquelle eine LED (1) ist, zwischen der und dem Lichtmodul ein als Wärmesperre dienendes erstes Wandelement (8) einer die LED (1) aufnehmenden Kammer (2) verläuft.

2. Scheinwerfer nach Anspruch 1, **dadurch gekennzeichnet, dass** ein oder mehrere Lichtleitelemente (6) durch das als Wärmesperre dienende erste Wandelement (8) hindurch verlaufen.

3. Scheinwerfer nach Anspruch 1 oder 2, **dadurch gekennzeichnet, dass** die LED (1) und das erste Wandelement (8) in einem unteren Bereich des Gehäuses (7) angeordnet sind.

4. Scheinwerfer nach einem der Ansprüche 1 bis 3, **dadurch gekennzeichnet, dass** das erste Wandelement (8) von einem Bauteil des Gehäuses (7) gebildet ist, das geringere Wärmeleitungseigenschaften aufweist als die Außenwände des Gehäuses (7).

5. Scheinwerfer nach einem der Ansprüche 1 bis 4, **dadurch gekennzeichnet, dass** das der erste Wandabschnitt (8) den Innenraum des Gehäuses (7) luftdicht abschließt.

6. Scheinwerfer nach einem der Ansprüche 1 bis 5, **dadurch gekennzeichnet, dass** die die LED (1) aufnehmende Kammer (2) eine Kühleinrichtung aufweist, die Wärme zur Umgebungsluft des Scheinwerfers abführt.

7. Scheinwerfer nach Anspruch 6, **dadurch gekennzeichnet, dass** als Kühleinrichtung ein zweites Wandelement (4) dient, das die die LED (1) aufnehmende Kammer (2) zur Umgebungsluft des Scheinwerfers begrenzt.

8. Scheinwerfer nach Anspruch 7, **dadurch gekennzeichnet, dass** die LED (1) an dem zweiten Wandelement (4) gehaltert ist.

9. Scheinwerfer nach Anspruch 7 oder 8, **dadurch gekennzeichnet, dass** das zweite Wandelement (4) ein separates Bauteil ist und das erste Wandelement (8) einstückig mit dem Gehäuse (7) ausgeführt ist.

10. Scheinwerfer nach einem der Ansprüche 1 bis 8, **dadurch gekennzeichnet, dass** als Kühleinrichtung eine Belüftungseinrichtung dient, die die Innenluft der Kammer (2) mit der Umgebungsluft verbindet.

11. Scheinwerfer nach einem der Ansprüche 1 bis 10, **dadurch gekennzeichnet, dass** die LED (1) in der Nähe des äußeren Randes der Lichtscheibe des Gehäuses (7) angeordnet ist.
